# EUROPÄISCHE PATENTSCHRIFT

(11) **EP 3 274 211 B1**
(45) Veröffentlichungstag und Bekanntmachung des Hinweises auf die Patenterteilung: **21.04.2021**
(21) Anmeldenummer: 16710180.7
(22) Anmeldetag: 16.03.2016
(51) Int. Cl.: F16H 25/24, B60N 2/06

(54) **EINSTELLVORRICHTUNG FÜR EINEN FAHRZEUGSITZ SOWIE FAHRZEUGSITZ**
ADJUSTING DEVICE FOR A VEHICLE SEAT AND VEHICLE SEAT
DISPOSITIF DE RÉGLAGE POUR SIÈGE DE VÉHICULE ET SIÈGE DE VÉHICULE

(30) Priorität: 24.03.2015 DE 102015205249
(43) Veröffentlichungstag der Anmeldung: 31.01.2018
(73) Patentinhaber: Adient Luxembourg Holding S.à r.l., 1855 Luxembourg (LU)
(72) Erfinder: HOFFMANN, Andreas, 42489 Wuelfrath (DE); BALZAR, David, 42651 Solingen (DE)
(74) Vertreter: Liedhegener, Ralf
(86) Internationale Anmeldenummer: PCT/EP2016/055681
(87) Internationale Veröffentlichungsnummer: WO 2016/150790

(56) Entgegenhaltungen:
- EP-A1- 0 311 478
- WO-A1-2012/108130
- DE-A1-102010 001 844
- DE-A1-102011 085 873
- DE-U1-202006 009 868
- DE-U1-202009 001 847
- FR-A1- 2 832 362
- US-A- 3 081 644

## Beschreibung

Die Erfindung betrifft eine Einstellvorrichtung für einen Fahrzeugsitz, insbesondere Längseinsteller für einen Kraftfahrzeugsitz, mit wenigstens einem ersten Einstellelement, wenigstens einem relativ zu dem ersten Einstellelement beweglichen zweiten Einstellelement, einer dem ersten Einstellelement zugeordneten Spindel mit einem Außengewinde zum Zusammenwirken mit einem Innengewinde einer dem zweiten Einstellelement zugeordneten Spindelmutter. Die Erfindung betrifft zudem einen Fahrzeugsitz mit einer solchen Einstellvorrichtung.

### Stand der Technik

Aus der EP 1 103 411 B1 ist eine Einstellvorrichtung für einen Fahrzeugsitz bekannt, die ein erstes Einstellelement und ein zweites Einstellelement aufweist, das mit dem ersten Einstellelement bewegungsverbunden ist, insbesondere eine Längseinstellvorrichtung eines Untergestells des Fahrzeugsitzes gegenüber einem Sitzteil, wobei die Einstellvorrichtung eine Spindel und eine zugeordnete Spindelmutter hat, die die Spindel umgreift und wobei die Spindel drehfest an dem ersten Einstellelement der Einstellvorrichtung fixiert ist und die Spindelmutter drehbar in dem zweiten Einstellelement gelagert ist und an ihrem Außenmantel ein Schneckenrad aufweist, welches mit einer Schnecke die mit einem Drehantrieb verbindbar ist, in Eingriff ist und aus Kunststoff gefertigt ist. Die Spindelmutter ist an jedem ihrer beiden axialen Endbereiche von einem aus Metall gefertigten Verstärkungstopf umgriffen, der den jeweiligen Endbereich der Spindelmutter ringförmig umschließt und mit ihr drehfest verbunden ist.

Die DE 10 2010 001 844 A1 offenbart eine Einstellvorrichtung für einen Fahrzeugsitz mit einem ersten Einstellelement, einem relativ zu dem ersten Einstellelement beweglichen zweiten Einstellelement, einer dem ersten Einstellelement zugeordneten Spindel mit einem Außengewinde zum Zusammenwirken mit einem Innengewinde einer dem zweiten Einstellelement zugeordneten Spindelmutter, wobei ein Grundkörper der Spindelmutter aus Stahl besteht, und das Innengewinde der Spindelmutter abschnittsweise aus einem Kunststoff besteht.

Die US 3 081 644 A offenbart eine Einstellvorrichtung mit einer Spindel mit einem Außengewinde zum Zusammenwirken mit einem Innengewinde einer Spindelmutter, wobei ein Grundkörper der Spindel aus Metall besteht und das Außengewinde der Spindel mit einer Kunststoffschicht überzogen ist.

### Aufgabe

Der Erfindung liegt die Aufgabe zu Grunde, eine Einstellvorrichtung, insbesondere einen Längseinsteller für einen Fahrzeugsitz der eingangs genannten Art, zu verbessern. Insbesondere sollen Störgeräusche während einer Verstellung der Einstellvorrichtung vermieden werden. Insbesondere soll eine Einstellvorrichtung mit einer hohen Festigkeit bereitgestellt werden.

### Lösung

Diese Aufgabe wird erfindungsgemäß durch eine Einstellvorrichtung mit den Merkmalen des Anspruchs 1 oder 11 gelöst.

Dadurch, dass ein Grundkörper der Spindelmutter aus Metall, insbesondere Stahl, besteht und das Innengewinde der Spindelmutter wenigstens abschnittsweise aus Kunststoff besteht oder mit einer Kunststoffschicht überzogen ist, können Geräusche während eines Verstellvorgangs der Einstellvorrichtung vermieden werden, die häufig durch unzureichende Fettung zwischen Stahl - Stahl Paarungen entstehen. Der Grundkörper der Spindelmutter aus Metall erhöht gegenüber einer Spindelmutter, die vollständig aus einem Kunststoff besteht, die Festigkeit.

Alternativ oder zusätzlich kann ein Grundkörper der Spindel aus Metall, insbesondere Stahl, bestehen und das Außengewinde der Spindel wenigstens abschnittsweise aus Kunststoff bestehen oder mit einer Kunststoffschicht überzogen sein. Dadurch können ebenfalls Geräusche während eines Verstellvorgangs der Einstellvorrichtung vermieden werden, die häufig durch unzureichende Fettung zwischen Stahl - Stahl Paarungen entstehen.

Vorteilhafte Ausgestaltungen, welche einzeln oder in Kombination miteinander eingesetzt werden können, sind Gegenstand der Unteransprüche.

Die Einstellvorrichtung kann ein Längseinsteller für einen Kraftfahrzeugsitz sein. Die Einstellvorrichtung kann ein Höheneinsteller für einen Kraftfahrzeugsitz sein. Die Einstellvorrichtung kann ein Sitzneigungseinsteller für einen Kraftfahrzeugsitz sein.

Vorzugsweise ist das Innengewinde der Spindelmutter mehrgängig ausgeführt. Das entsprechende Außengewinde der Spindel ist dann ebenfalls mehrgängig ausgeführt. Ein mehrgängig ausgeführtes Innengewinde der Spindelmutter hat den Vorteil, dass einzelne Gewindegänge unterschiedlich ausgeführt sein können und somit unterschiedliche Teilaufgaben lösen können.

Der zweite Gewindegang kann in eine wendeiförmig verlaufende Nut in dem Grundkörper der Spindelmutter eingebracht sein. Dabei ist die Nut derart tief, dass ausreichend Bauraum zum Einbringen des zweiten Gewindegangs in die Nut vorhanden ist. Der zweite Gewindegang kann mittels eines Spritzgussverfahrens hergestellt sein. Der zweite Gewindegang kann in die wendeiförmig verlaufende Nut in dem Grundkörper der Spindelmutter eingespritzt und/oder eingeklemmt und/oder eingeklebt und/oder in sonstiger Weise geeignet eingebracht sein.

Ein Flankenspiel zwischen dem Außengewinde der Spindel und einem zweiten Gewindegang des Innengewindes der Spindelmutter ist vorzugsweise kleiner als ein Flankenspiel zwischen dem Außengewinde der Spindel und einem ersten Gewindegang des Innengewindes der Spindelmutter. In einem Normalbetrieb der Einstellvorrichtung ist der zweite Gewindegang vorzugsweise in Kontakt mit dem Außengewinde, und der erste Gewindegang hat Spiel zu dem Außengewinde, wobei unter Crashbelastungen auch der erste Gewindegang in Kontakt mit dem Außengewinde ist. Der zweite Gewindegang ist unter Crashbelastungen vorzugsweise plastisch deformierbar. Alternativ kann der zweite Gewindegang unter Crashbelastungen ausschließlich elastisch deformierbar sein.

Das Außengewinde der Spindel besteht vorzugsweise vollständig aus Metall. Das Außengewinde der Spindel besteht vorzugsweise vollständig aus Stahl. Die Spindel kann jedoch auch derart gestaltet sein, dass ein Grundkörper der Spindel aus Metall, insbesondere Stahl, besteht und das Außengewinde der Spindel wenigstens abschnittsweise aus Kunststoff besteht oder mit einer Kunststoffschicht überzogen ist. Dabei können sämtliche zuvor beschriebenen Merkmale des Innengewindes der Spindelmutter in analoger Weise auf das Außengewinde der Spindel übertragen werden.

Anders und zusammenfassend ausgedrückt, löst die Erfindung die vorgenannte Aufgabe durch Einbringung von Kunststoff in die Spindelmutter, welcher als Reibpartner zu einer Stahl-Spindel fungiert. Es werden dadurch Störgeräusche während der Verstellung vermieden, die häufig durch unzureichende Fettung zwischen Stahl - Stahl-Paarungen entstehen.

Vorzugsweise weist eine Spindelmutter für eine zweigängige Trapezgewinde-Spindel genau zwei Gewindegänge auf. Nach Einlegen in ein Kunststoff-Spritzwerkzeug wird nur der zweite Gewindegang im Material Kunststoff erzeugt. Das Flankenspiel des Kunststoffgewindeganges ist konstruktiv geringer als das des Stahlgewindeganges. Ziel ist ein reiner Kunststoff - Stahl Kontakt während der Verstellung. Im Crashfall trägt der Stahlgewindegang nach plastischer Deformation des Kunststoffgewindeganges die auftretenden Maximallasten.

Eine weitere bevorzugte Ausführungsform sieht vor, dass das Innengewinde einer Stahl-Spindelmutter für eine zweigängige Trapezgewinde-Spindel innen vollständig mit einer Kunststoffschicht überzogen ist. Das metallische Gewinde wird mit erhöhtem Flankenspiel hergestellt, um Bauraum für den Kunststoffanteil zu schaffen. Die Überdeckung zwischen den metallischen Gewindeteilen ist dabei groß genug, um Crashlasten aufnehmen zu können

Eine Außenverzahnung der Spindelmutter kann geradverzahnt sein. Eine Außenverzahnung der Spindelmutter kann schrägverzahnt sein. Eine Außenverzahnung der Spindelmutter kann in Eingriff mit einer Schnecke des Getriebes sein. Die Spindelmutter ist dann ein außenverzahntes Schneckenrad eines Schneckengetriebes und weist zudem das Innengewinde für den Spindelantrieb auf. Die Schnecke kann mittels einer insbesondere flexiblen Welle von einem Elektromotor angetrieben sein.

Die Aufgabe wird zudem durch einen Fahrzeugsitz mit einer erfindungsgemäßen Einstellvorrichtung gelöst. Ein Fahrzeugsitz mit einer solchen Einstellvorrichtung neigt deutlich weniger zu Störgeräuschen während einer Verstellung der Einstellvorrichtung.

### Figuren und Ausführungsformen der Erfindung

Im Folgenden ist die Erfindung anhand eines in den Figuren dargestellten vorteilhaften Ausführungsbeispiels näher erläutert. Die Erfindung ist jedoch nicht auf dieses Ausführungsbeispiel beschränkt. Es zeigen:
- Fig. 1:: eine schematische Seitenansicht eines Fahrzeugsitzes,
- Fig. 2:: eine perspektivische Darstellung eines Spindelantriebs eines Längseinstellers,
- Fig. 3:: eine Seitenansicht einer Spindelmutter,
- Fig. 4:: eine Vorderansicht in Längsrichtung auf die Spindelmutter aus Fig. 3,
- Fig. 5:: einen Schnitt durch die Spindelmutter näherungsweise entlang der Linie V - V in Fig. 4 sowie eingeblendet einen mit der Spindelmutter in Zahneingriff befindlichen Teilabschnitt einer Spindel, und
- Fig. 6:: einen Schnitt durch die Spindelmutter näherungsweise entlang der Linie VI - VI in Fig. 4.

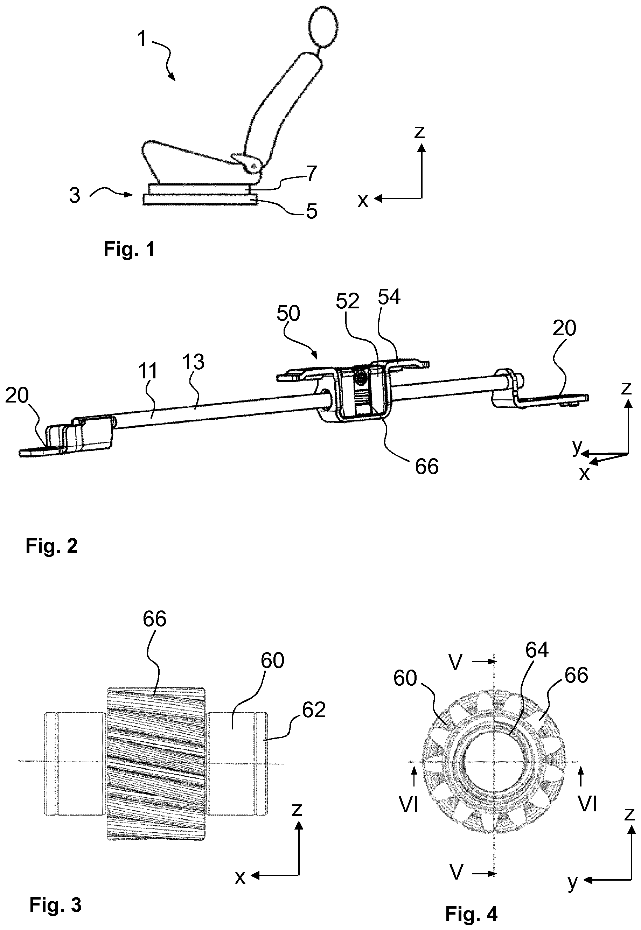

Ein in Figur 1 schematisch dargestellter Fahrzeugsitz 1 wird nachfolgend unter Verwendung von drei senkrecht zueinander verlaufenden Raumrichtungen beschrieben. Eine Längsrichtung x verläuft bei einem im Fahrzeug eingebauten Fahrzeugsitz 1 weitgehend horizontal und vorzugsweise parallel zu einer Fahrzeuglängsrichtung, die der gewöhnlichen Fahrtrichtung des Fahrzeuges entspricht. Eine zu der Längsrichtung x senkrecht verlaufende Querrichtung y ist im Fahrzeug ebenfalls horizontal ausgerichtet und verläuft parallel zu einer Fahrzeugquerrichtung. Eine Vertikalrichtung z verläuft senkrecht zu der Längsrichtung x und senkrecht zu der Querrichtung y. Bei einem im Fahrzeug eingebauten Fahrzeugsitz 1 verläuft die Vertikalrichtung z parallel zu der Fahrzeughochachse. Die verwendeten Positions- und Richtungsangaben, wie beispielsweise vorne, hinten, oben und unten beziehen sich auf eine Blickrichtung eines im Fahrzeugsitz 1 sitzenden Insassen in normaler Sitzposition. Der erfindungsgemäße Fahrzeugsitz 1 kann jedoch auch in abweichender Ausrichtung, beispielsweise quer zur Fahrtrichtung verbaut werden.

Der Fahrzeugsitz 1 weist für eine Änderung der Sitzlängsposition als eine motorisch angetriebene Einstellvorrichtung einen Längseinsteller 3 mit je einem Sitzschienenpaar auf jeder Fahrzeugsitzseite auf. Das Sitzschienenpaar besteht jeweils aus einer mit der Fahrzeugstruktur verbindbaren Unterschiene als einer ersten Sitzschiene 5 und einer sitzstrukturfesten Oberschiene als einer zweiten Sitzschiene 7. Die erste Sitzschiene 5 und die zweite Sitzschiene 7 umgreifen einander wechselseitig in an sich bekannter Weise und sind in Längsrichtung x verschiebbar aneinander gelagert.

Figur 2 zeigt schematisch einen Spindelantrieb des erfindungsgemäßen Längseinstellers 3. Die beiden Sitzschienen 5, 7 bilden zwischen sich einen Bauraum. Innerhalb dieses Bauraums des Sitzschienenpaares 5, 7 ist in Längsrichtung x eine mit der ersten Sitzschiene 5 verbundene Spindel 11 angeordnet, auf deren Außenseite ein Außengewinde 13 ausgebildet ist. Das Außengewinde 13 ist vorliegend ein zweigängiges Trapezgewinde. Ein vorderes Ende und ein hinteres Ende der Spindel 11 sind mittels jeweils eines Spindelhalters 20 an der ersten Sitzschiene 5 befestigt. Die Spindel 11 ist mittels der Spindelhalter 20 in dem Bauraum zwischen beiden Sitzschienen 5, 7 angeordnet und von Wandungen der ersten Sitzschiene 5 beabstandet an der ersten Sitzschiene 5 fixiert.

Ein von einem Motor des Längseinstellers 3 antreibbares Getriebe 50, welches in einem mit der zweiten Sitzschiene 7 mittels eines Haltebügels 54 fest verbundenen Gehäuse 52 gelagert ist, weist - neben weiteren miteinander in Getriebeverbindung stehenden Getriebeelementen - eine Spindelmutter 60 auf, welche ein Innengewinde 64 und eine Außenverzahnung 66 aufweist. Das Innengewinde 64 ist vorliegend ein zweigängiges Trapezgewinde, das komplementär zu dem Außengewinde 13 der Spindel 11 ist. Die Spindelmutter 60 ist auf die Spindel 11 aufgeschraubt, so dass die Spindel 11 die Spindelmutter 60 in Längsrichtung x durchläuft. Dabei ist das Innengewinde 64 der Spindelmutter 60 im Eingriff mit dem Außengewinde 13 der Spindel 11. Durch eine Relativdrehung zwischen der Spindelmutter 60 und der Spindel 11 ist die Spindelmutter 60 in Längsrichtung x relativ zu der Spindel 11 beweglich. Treibt der Motor das Getriebe 50 an, so wird die Spindelmutter 60 mittels der Außenverzahnung 66 gedreht. Dadurch verschiebt sich die Spindelmutter 60 entlang der Spindel 11 unter Mitnahme des Getriebes 50 und damit der zweiten Sitzschiene 7 und eines damit verbundenen Oberbaus des Fahrzeugsitzes 1.

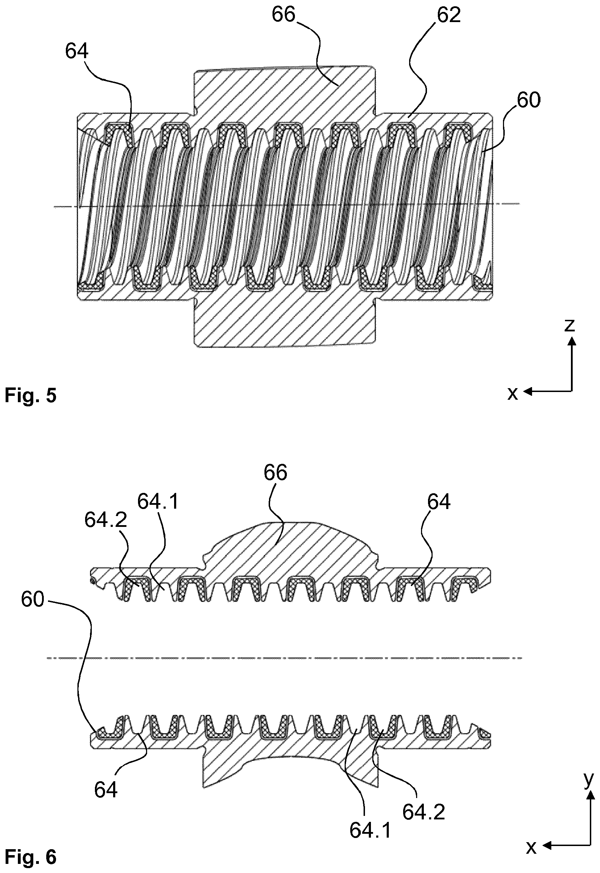

Die Figuren 3 bis 6 zeigen die Spindelmutter 60 des erfindungsgemäßen Längseinstellers 3. Die Spindelmutter 60 weist einen Grundkörper 62 aus Stahl auf. Das Innengewinde 64 ist zweigängig und weist daher einen ersten Gewindegang 64.1 und einen parallel zum ersten Gewindegang 64.1 verlaufenden zweiten Gewindegang 64.2 auf.

Der erste Gewindegang 64.1 ist in Stahl gefertigt. Der erste Gewindegang 64.1 ist unmittelbar in den Grundkörper 62 eingearbeitet. Der zweite Gewindegang 64.2 ist aus Kunststoff. Der zweite Gewindegang 64.2 ist in eine umlaufende Nut in dem Grundkörper 62 eingebracht, beispielsweise mittels eines Spritzgussverfahrens. Ein Flankenspiel des aus Kunststoff bestehenden zweiten Gewindeganges 64.2 ist geringer als das Flankenspiel des ersten Gewindeganges 64.1. Im Normalbetrieb des Längseinstellers 3 trägt nur der zweite Gewindegang 64.2. Ein zweiter Gewindegang des Außengewindes 13 der Spindel 11 ist somit in Kontakt mit dem Kunststoff des zweiten Gewindeganges 64.2. Ein erster Gewindegang des Außengewindes 13 der Spindel 11 ist jedoch nicht in Kontakt mit dem Stahl des ersten Gewindeganges 64.1. Im Normalbetrieb liegt somit ein reiner Kunststoff - Stahl-Kontakt vor. Im Crashfall trägt nach plastischer Deformation des Kunststoffmaterials des zweiten Gewindeganges 64.2 der erste Gewindegang 64.1 aus Stahl die auftretenden Maximallasten.

In einem zweiten, in den Figuren nicht dargestellten Ausführungsbeispiel, besteht ein Grundkörper der Spindelmutter ebenfalls aus Stahl. Das Innengewinde der Spindelmutter ist innen vollständig mit einer Kunststoffschicht überzogen. Der Grundkörper aus Stahl hat ein erhöhtes Flankenspiel, um Bauraum für den Kunststoffanteil zu schaffen. Die Überdeckung zwischen den metallischen Gewindeanteilen ist dabei groß genug, um Crashlasten aufnehmen zu können.

### Bezugszeichenliste

- 1: Fahrzeugsitz
- 3: Längseinsteller
- 5: erste Sitzschiene
- 7: zweite Sitzschiene
- 11: Spindel
- 13: Außengewinde
- 20: Spindelhalter
- 50: Getriebe
- 52: Gehäuse
- 54: Haltebügel
- 60: Spindelmutter
- 62: Grundkörper
- 64: Innengewinde
- 64.1: erster Gewindegang
- 64.2: zweiter Gewindegang
- 66: Außenverzahnung
- x: Längsrichtung
- y: Querrichtung
- z: Vertikalrichtung

## Patentansprüche

1. Einstellvorrichtung (3) für einen Fahrzeugsitz (1) mit wenigstens einem ersten Einstellelement (5), wenigstens einem relativ zu dem ersten Einstellelement (5) beweglichen zweiten Einstellelement (7), einer dem ersten Einstellelement (5) zugeordneten Spindel (11) mit einem Außengewinde (13) zum Zusammenwirken mit einem Innengewinde (64) einer dem zweiten Einstellelement (7) zugeordneten Spindelmutter (60), wobei ein Grundkörper (62) der Spindelmutter (60) aus Metall, insbesondere Stahl, besteht, und das Innengewinde (64) der Spindelmutter (60) wenigstens abschnittsweise aus einem Kunststoff besteht oder mit einer Kunststoffschicht überzogen ist,
**dadurch gekennzeichnet, dass**
das Innengewinde (64) der Spindelmutter (60) zweigängig mit einem ersten Gewindegang (64.1) und einem zweiten Gewindegang (64.2) ausgeführt ist, wobei der erste Gewindegang (64.1) in Stahl ausgeführt ist, und der zweite Gewindegang (64.2) aus einem Kunststoff besteht oder mit einer Kunststoffschicht überzogen ist.

2. Einstellvorrichtung (3) nach Anspruch 1, **dadurch gekennzeichnet, dass** die Einstellvorrichtung ein Längseinsteller (3) mit wenigstens einer ersten Sitzschiene (5) als einem ersten Einstellelement und wenigstens einer zweiten Sitzschiene (7) als einem zweiten Einstellelement ist.

3. Einstellvorrichtung (3) nach Anspruch 1 oder 2, **dadurch gekennzeichnet, dass** das Innengewinde (64) der Spindelmutter (60) mehrgängig ausgeführt ist.

4. Einstellvorrichtung (3) nach einem der Ansprüche 1 bis 3, **dadurch gekennzeichnet, dass** der zweite Gewindegang (64.2) in eine wendeiförmig verlaufende Nut in dem Grundkörper (62) der Spindelmutter (60) eingebracht ist.

5. Einstellvorrichtung (3) nach Anspruch 4, **dadurch gekennzeichnet, dass** der zweite Gewindegang (64.2) mittels eines Spritzgussverfahrens hergestellt ist, insbesondere der zweite Gewindegang (64.2) in die wendeiförmig verlaufende Nut in dem Grundkörper (62) der Spindelmutter (60) eingespritzt ist.

6. Einstellvorrichtung (3) nach einem der Ansprüche 1 bis 5, **dadurch gekennzeichnet, dass** ein Flankenspiel zwischen dem Außengewinde (13) und dem zweiten Gewindegang (64.2) kleiner ist als ein Flankenspiel zwischen dem Außengewinde (13) und dem ersten Gewindegang (64.1).

7. Einstellvorrichtung (3) nach einem der Ansprüche 1 bis 6, **dadurch gekennzeichnet, dass** in einem Normalbetrieb der Einstellvorrichtung (3) der zweite Gewindegang (64.2) in Kontakt mit dem Außengewinde (13) ist, und der erste Gewindegang (64.1) Spiel zu dem Außengewinde (13) hat, wobei unter Crashbelastungen auch der erste Gewindegang (64.1) in Kontakt mit dem Außengewinde (13) ist.

8. Einstellvorrichtung (3) nach Anspruch 7, **dadurch gekennzeichnet, dass** der zweite Gewindegang (64.2) unter Crashbelastungen plastisch deformierbar ist.

9. Einstellvorrichtung (3) nach einem der Ansprüche 1 bis 8, **dadurch gekennzeichnet, dass** das Außengewinde (13) der Spindel (11) aus Stahl besteht.

10. Einstellvorrichtung nach einem der Ansprüche 1 bis 9, **dadurch gekennzeichnet, dass** ein Grundkörper der Spindel aus Metall, insbesondere Stahl, besteht und das Außengewinde der Spindel wenigstens abschnittsweise aus Kunststoff besteht oder mit einer Kunststoffschicht überzogen ist.

11. Einstellvorrichtung für einen Fahrzeugsitz (1) mit wenigstens einem ersten Einstellelement, wenigstens einem relativ zu dem ersten Einstellelement beweglichen zweiten Einstellelement, einer dem ersten Einstellelement zugeordneten Spindel mit einem Außengewinde zum Zusammenwirken mit einem Innengewinde einer dem zweiten Einstellelement zugeordneten Spindelmutter, wobei ein Grundkörper der Spindel aus Metall, insbesondere Stahl, besteht und das Außengewinde der Spindel wenigstens abschnittsweise aus Kunststoff besteht oder mit einer Kunststoffschicht überzogen ist,
**dadurch gekennzeichnet, dass**
das Außengewinde der Spindel zweigängig mit einem ersten Gewindegang und einem zweiten Gewindegang ausgeführt ist, wobei der erste Gewindegang in Stahl ausgeführt ist, und der zweite Gewindegang aus einem Kunststoff besteht oder mit einer Kunststoffschicht überzogen ist.

12. Fahrzeugsitz (1) mit einer Einstellvorrichtung (3), insbesondere einem Längseinsteller (3), nach einem der Ansprüche 1 bis 11.

## Claims

1. Adjusting device (3) for a vehicle seat (1), having at least one first adjusting element (5), having at least one second adjusting element (7), which can be moved relative to the first adjusting element (5), and having a spindle (11), which is assigned to the first adjusting element (5) and has an external thread (13) for interacting with an internal thread (64) of a spindle nut (60) assigned to the second adjusting element (7), wherein a main body (62) of the spindle nut (60) consists of metal, in particular steel, and the internal thread (64) of the spindle nut (60) consists, at least in part, of a plastics material or is coated by a plastics-material layer,
**characterized in that**
the internal thread (64) of the spindle nut (60) is of two-start design with a first thread helix (64.1) and a second thread helix (64.2), wherein the first thread helix (64.1) is formed in steel, and the second thread helix (64.2) consists of a plastics material or is coated by a plastics-material layer.

2. Adjusting device (3) according to Claim 1, **characterized in that** the adjusting device is a longitudinal adjuster (3) having at least one first seat rail (5) as a first adjusting element and at least one second seat rail (7) as a second adjusting element.

3. Adjusting device (3) according to Claim 1 or 2, **characterized in that** the internal thread (64) of the spindle nut (60) is of multi-start design.

4. Adjusting device (3) according to one of Claims 1 to 3, **characterized in that** the second thread helix (64.2) is introduced into a helically running groove in the main body (62) of the spindle nut (60).

5. Adjusting device (3) according to Claim 4, **characterized in that** the second thread helix (64.2) is produced by means of an injection moulding process, in particular the second thread helix (64.2) is injection moulded into the helically running groove in the main body (62) of the spindle nut (60).

6. Adjusting device (3) according to one of Claims 1 to 5, **characterized in that** a flank clearance between the external thread (13) and the second thread helix (64.2) is smaller than a flank clearance between the external thread (13) and the first thread helix (64.1).

7. Adjusting device (3) according to one of Claims 1 to 6, **characterized in that**, during normal operation of the adjusting device (3), the second thread helix (64.2) is in contact with the external thread (13) and the first thread helix (64.1) has an amount of clearance in relation to the external thread (13), wherein, under crash-induced loading, it is also the case that the first thread helix (64.1) is in contact with the external thread (13).

8. Adjusting device (3) according to Claim 7, **characterized in that** the second thread helix (64.2) is plastically deformable under crash-induced loading.

9. Adjusting device (3) according to one of Claims 1 to 8, **characterized in that** the external thread (13) of the spindle (11) consists of steel.

10. Adjusting device according to one of Claims 1 to 9, **characterized in that** a main body of the spindle consists of metal, in particular steel, and the external thread of the spindle consists, at least in part, of plastics material or is coated by a plastics-material layer.

11. Adjusting device for a vehicle seat (1), having at least one first adjusting element, having at least one second adjusting element, which can be moved relative to the first adjusting element, and having a spindle, which is assigned to the first adjusting element and has an external thread for interacting with an internal thread of a spindle nut assigned to the second adjusting element, wherein a main body of the spindle consists of metal, in particular steel, and the external thread of the spindle consists, at least in part, of plastics material or is coated by a plastics-material layer,
**characterized in that**
the external thread of the spindle is of two-start design with a first thread helix and a second thread helix, wherein the first thread helix is formed in steel, and the second thread helix consists of a plastics material or is coated by a plastics-material layer.

12. Vehicle seat (1) having an adjusting device (3), in particular a longitudinal adjuster (3), according to one of Claims 1 to 11.

## Revendications

1. Dispositif de réglage (3) pour un siège de véhicule (1), comportant au moins un premier élément de réglage (5), au moins un deuxième élément de réglage (7) mobile par rapport au premier élément de réglage (5), une broche (11) associée au premier élément de réglage (5) et dotée d'un filetage extérieur (13) destiné à coopérer avec un filetage intérieur (64) d'un écrou de broche (60) associé au deuxième élément de réglage (7), dans lequel un corps de base (62) de l'écrou de broche (60) est constitué de métal, en particulier d'acier, et le filetage intérieur (64) de l'écrou de broche (60) est constitué, au moins dans certaines parties, d'une matière synthétique ou est revêtu d'une couche de matière synthétique,
**caractérisé en ce que**
le filetage intérieur (64) de l'écrou de broche (60) est réalisé de manière à présenter deux filets avec un premier filet (64.1) et un deuxième filet (64.2), le premier filet (64.1) étant réalisé en acier, et le deuxième filet (64.2) étant constitué d'une matière synthétique ou étant revêtu d'une couche de matière synthétique.

2. Dispositif de réglage (3) selon la revendication 1, **caractérisé en ce que** le dispositif de réglage est un dispositif de réglage longitudinal (3) doté d'au moins un premier rail de siège (5) comme premier élément de réglage et d'au moins un deuxième rail de siège (7) comme deuxième élément de réglage.

3. Dispositif de réglage (3) selon la revendication 1 ou 2, **caractérisé en ce que** le filetage intérieur (64) de l'écrou de broche (60) est réalisé de manière à présenter plusieurs filets.

4. Dispositif de réglage (3) selon l'une des revendications 1 à 3, **caractérisé en ce que** le deuxième filet (64.2) est inséré dans une rainure s'étendant de manière hélicoïdale dans le corps de base (62) de l'écrou de broche (60).

5. Dispositif de réglage (3) selon la revendication 4, **caractérisé en ce que** le deuxième filet (64.2) est fabriqué par le biais d'un procédé de moulage par injection, en particulier le deuxième filet (64.2) est moulé par injection dans la rainure s'étendant de manière hélicoïdale dans le corps de base (62) de l'écrou de broche (60).

6. Dispositif de réglage (3) selon l'une des revendications 1 à 5, **caractérisé en ce qu'**un jeu de filet entre le filetage extérieur (13) et le deuxième filet (64.2) est inférieur à un jeu de filet entre le filetage extérieur (13) et le premier filet (64.1).

7. Dispositif de réglage (3) selon l'une des revendications 1 à 6, **caractérisé en ce que** dans un fonctionnement normal du dispositif de réglage (3), le deuxième filet (64.2) est en contact avec le filetage extérieur (13), et le premier filet (64.1) présente un jeu par rapport au filetage extérieur (13), le premier filet (64.1) étant également en contact avec le filetage extérieur (13) sous l'effet de sollicitations de collision.

8. Dispositif de réglage (3) selon la revendication 7, **caractérisé en ce que** le deuxième filet (64.2) est déformable plastiquement sous l'effet de sollicitations de collision.

9. Dispositif de réglage (3) selon l'une des revendications 1 à 8, **caractérisé en ce que** le filetage extérieur (13) de la broche (11) est constitué d'acier.

10. Dispositif de réglage selon l'une des revendications 1 à 9, **caractérisé en ce qu'**un corps de base de la broche est constitué de métal, en particulier d'acier, et le filetage extérieur de la broche est constitué, au moins dans certaines parties, d'une matière synthétique ou est revêtu d'une couche de matière synthétique.

11. Dispositif de réglage pour un siège de véhicule (1), comportant au moins un premier élément de réglage, au moins un deuxième élément de réglage mobile par rapport au premier élément de réglage, une broche associée au premier élément de réglage et dotée d'un filetage extérieur destiné à coopérer avec un filetage intérieur d'un écrou de broche associé au deuxième élément de réglage, dans lequel un corps de base de la broche est constitué de métal, en particulier d'acier, et le filetage extérieur de la broche est constitué, au moins dans certaines parties, d'une matière synthétique ou est revêtu d'une couche de matière synthétique,
**caractérisé en ce que**
le filetage extérieur de la broche est réalisé de manière à présenter deux filets avec un premier filet et un deuxième filet, le premier filet étant réalisé en acier, et le deuxième filet étant constitué d'une matière synthétique ou étant revêtu d'une couche de matière synthétique.

12. Siège de véhicule (1) comportant un dispositif de réglage (3), en particulier un dispositif de réglage longitudinal (3), selon l'une des revendications 1 à 11.
